# EUROPEAN PATENT APPLICATION

(11) **EP 3 260 837 A1**
(43) Date of publication of application: **27.12.2017**
(21) Application number: 16175530.1
(22) Date of filing: 21.06.2016
(51) Int. Cl.: G01M 7/02, H02N 2/04

(54) **TEST APPARATUS**

(71) Applicant: Continental Automotive GmbH, 30165 Hannover (DE)
(72) Inventor: Mannucci, Cristiano, 57124 Livorno (IT); Soriani, Luca, 57124 Livorno (IT)

(57) **Abstract**

Test apparatus for enabling measurement of parameters of a component (6) subject to vibrations, the apparatus being adapted to accommodate a first vibratable body (2), vibratable relative to a fixed base (8), the vibratable body (2) being adapted to support a test component (6) subjected in use to a variable force, and comprising a piezo-electric exciter (16), the output of which comprises a displacement generator to vibrate said vibratable body (2) and a controller (14) to measure the displacement of vibrations and to feed a control signal representative of the vibrations to the piezo-electric exciter(16). The displacement output of the piezo-electric exciter (16) is transmitted to the vibratable body through a lever arrangement (18) adapted to amplify the displacement output of the piezo-electric exciter.

## Description

The present disclosure relates to test apparatus for testing a parameter or parameters of a component subjected, in use, to vibration.

The test apparatus of the present disclosure is particularly, but not exclusively, applicable to testing components of an internal combustion engine. Such engines inevitably generate vibrations during operation, which are in turn transmitted to the engine components. It is a requirement that the efficiency of functioning and reliability of the components is tested thoroughly. Testing the components in use such as in a vehicle on a test track or road has the disadvantage that it is not possible to accurately compare the results of such components in different vehicles because of the inevitable variations which occur in practice. It is also not possible to monitor the status of the components during use with the result that extensive testing is necessary particularly as far as durability testing is concerned. Also, it is not possible to accurately compare the results of different tests. This method of testing is also extremely time-consuming and expensive.

As a result, laboratory bench testing is undertaken. This has the advantage that consistency between the testing of multiple components is achieved but has the disadvantage that the test results are not an accurate representation because the tests do not take place in their normal in use environment where they are subjected to vibration. There are significant costs and difficulties in integrating an electromagnetic shaker, which is needed to generate the vibration displacement at the required level, as disclosed for example in EP 2351631. Additionally, the associated measuring equipment for performing measurements on components and determining hydraulic fatigue or durability of components, such as lifetime simulation and the structural resistance made by vibrations, cannot easily be incorporated in test vehicles particularly on a large scale, with the result that testing in a vibrating environment is not carried out.

The present disclosure seeks to provide a solution to this problem by utilising a piezo-electric exciter.

Accordingly, there is disclosed test apparatus for enabling measurement of a parameter or parameters of a component subject to vibrations, the apparatus being adapted to accommodate a first vibratable body, vibratable relative to a fixed base, the vibratable body being adapted to support a test component subjected in use to a variable force, a piezo-electric exciter to vibrate said vibratable body and a controller to measure the displacement of vibrations and to feed a control signal representative of the vibrations to the piezo-electric exciter, the output of which comprises a displacement generator, wherein the displacement output of the piezo-electric exciter is transmitted to the vibratable body through a lever arrangement adapted to amplify the displacement output of the piezo-electric exciter.

In a preferred embodiment using a known piezo-electric stack, the lever ratio is 1:4 to thereby amplify the displacement of the exciter by a factor of four.

The apparatus has the advantage that by using a piezo-electric exciter, the apparatus is much more compact and of low-cost relative to electromagnetic shakers which can be 30 times the size of piezo-electric exciters, and it can therefore be integrated in relatively large scale testing on many components. The apparatus in accordance with the present disclosure is particularly applicable to testing such engine components as fuel injectors, fuel rail, sensors, pumps, high-pressure tubes, and low-pressure tubes.

In a preferred embodiment, the lever arrangement comprises a fulcrum secured to the fixed base, the lever being connected to the fulcrum intermediate the length of the lever, about which fulcrum the lever is pivotable, one end of the lever being pivotally connected to the displacement output of the exciter, and the other end of the lever being pivotally connected to the vibratable body.

Preferably, the length of the lever between the fulcrum and the pivotal connection to the vibratable body is longer than the length of the lever between the fulcrum and the displacement output of the exciter. Displacement output of the exciter can therefore be increased significantly to provide the degree of displacement which would otherwise not be available using a piezo-electric exciter.

In another embodiment, the position along the lever at which the lever is connected to the fulcrum is adjustable to vary the leverage ratio of the lever arrangement. This arrangement has the advantage that the range of displacement generated by the exciter can be increased or decreased and makes the test apparatus more flexible.

In a preferred arrangement, the controller is responsive to the vibration displacement of the vibratable body and is adapted to generate a control signal determined by the vibration displacement of the vibratable body to set and maintain the output of the piezo-electric exciter to a desired level.

In another embodiment, the vibratable body is mounted on the fixed base through a spring suspension arrangement. The spring stiffness and frequency is selected to run the fixture mass at the required frequencies with the applied masses.

There is also disclosed a method of testing a parameter or parameters of a component subject to vibrations in use, including the steps of: mounting the component in a vibratable body, mounting the vibratable body on a fixed base through a spring suspension arrangement, providing a piezo-electric exciter operable to generate a displacement output, and connecting the displacement output to the vibratable body, providing a controller to measure the displacement of the vibratable body and to generate an output control signal, transmitting the output control signal to the piezo-electric exciter to adjust the displacement output of the exciter and to maintain the displacement output at a desired value, connecting the displacement output of the piezo-electric exciter to the vibratable body through a lever arrangement, and arranging the lever arrangement to amplify the displacement output of the piezo-electric exciter.

An embodiment of the present invention will now be described with reference to the accompanying schematic drawing.

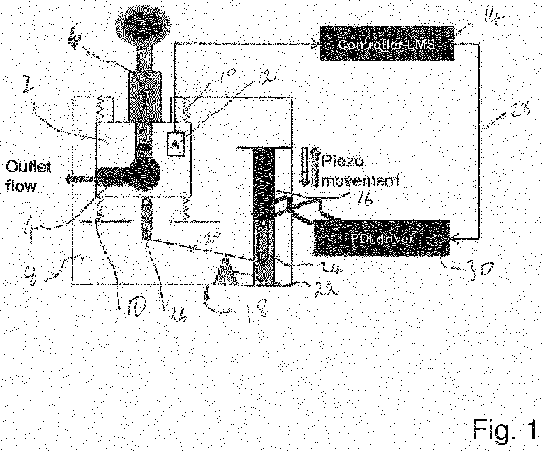

In the drawing there is shown schematically an internal combustion engine 2 having a combustion chamber 4 in which a fuel injector 6 is located. The engine 2 is mounted on a fixed base 8 through a spring suspension arrangement 10 so it is able to float to a predetermined amount relative to the fixed base. An accelerometer 12 is mounted on the engine to measure the vibration displacement of the engine relative to the fixed base 8. The vibration displacement of the engine in this embodiment is set to between 25 and 500um. The output signal representative of the engine vibration displacement is sent from the accelerometer 12 to a closed loop controller 14.

The apparatus includes a piezo-electric stack forming a piezo-electric exciter 16 which generates a linear output displacement at a predetermined frequency which in this embodiment is a maximum of 400hz. This linear output displacement is transmitted as a vibration to the engine 2 through a lever arrangement 18.

The lever arrangement 18 has a lever 20 mounted intermediate its length to a fulcrum 22 secured to the fixed base 8. At one end, the lever is pivotally connected to the output of the piezo-electric exciter by a pivot connection 24. At its other end the lever 20 is pivotally connected to the engine by a pivot connection 26. The length of the lever arm between the fulcrum 22 and the pivot connection 26 on the engine is much longer than the length of the lever between the fulcrum 22 and the pivot connection 24 on the piezo-electric exciter. In this way, the output of the piezo-electric exciter is amplified to provide the required extent of vibration displacement to the engine 2.

An output 28 from the controller 14 is supplied to a driver 30 which controls the output of the piezo-electric exciter. In this way, the output of the accelerometer 12 is measured and the output of the piezo-electric exciter 16 is modified by the driver 30 to ensure the desired constant value for the vibration displacement applied to the engine. As a result of the controlled and monitored vibration of the engine, it is possible for various parameters on the fuel injector or other component being tested to be measured for functional reasons or for reliability and durability in an environment as close to the normal operating environment as possible. In a fuel injector for example, it is possible to measure the hydraulic flow and pressure variations in a vibrating situation which simulates the normal operating environment.

## Claims

1. Test apparatus for enabling measurement of parameters of a component (6) subject to vibrations, the apparatus being adapted to accommodate a first vibratable body (2), vibratable relative to a fixed base (8), the vibratable body (2) being adapted to support a test component (6) subjected in use to a variable force, and comprising a piezo-electric exciter (16), the output of which comprises a displacement generator to vibrate said vibratable body (2) and a controller (14) to measure the displacement of vibrations and to feed a control signal representative of the vibrations to the piezo-electric exciter(16), wherein the displacement output of the piezo-electric exciter (16) is transmitted to the vibratable body through a lever arrangement (18) adapted to amplify the displacement output of the piezo-electric exciter.

2. Test apparatus according to claim 1, wherein the lever arrangement comprises a fulcrum (22) secured to the fixed base (8), the lever (20) being connected to the fulcrum (22) intermediate the length of the lever, about which fulcrum (22) the lever is pivotable, one end of the lever having a pivotable connection (24) connected to the displacement output of the exciter, and the other end of the lever having a pivotable connection (26) connected to the vibratable body (2).

3. Test apparatus according to claim 2, wherein the length of the lever (20) between the fulcrum (22) and the pivotal connection (26) to the vibratable body is longer than the length of the lever between the fulcrum (22) and the pivotal connection (24) at the displacement output of the exciter (16).

4. Test apparatus according to claim 2 or 3, wherein the position along the lever (20) at which the lever (20) is connected to the fulcrum (22) is adjustable to vary the leverage ratio of the lever arrangement.

5. Test apparatus according to any one of claims 1 to 4, wherein the controller (14) is responsive to the vibration displacement of the vibratable body (2) and is adapted to generate a control signal determined by the vibration displacement of the vibratable body (2) to set and maintain the output of the piezo-electric exciter (16) to a desired level.

6. Test apparatus according to any one of claims 1 to 5, wherein the vibratable body (2) is mounted on the fixed base through a spring suspension arrangement (10).

7. A method of testing a parameter or parameters of a component subject to vibrations in use, including the steps of: mounting the component in a vibratable body (2), mounting the vibratable body on a fixed base through a spring suspension arrangement (10), providing a piezo-electric exciter (16) operable to generate a displacement output, and connecting the displacement output to the vibratable body (2), providing a controller to measure the displacement of the vibratable body (2) and to generate an output control signal, transmitting the output control signal to the piezo-electric exciter (16) to adjust the displacement output of the exciter (16) and to maintain the displacement output at a desired value.

8. A method according to claim 8 in which the displacement output of the piezo-electric exciter (16) is transmitted to the vibratable body through a lever arrangement (10).

9. A method according to claim 9 wherein the lever arrangement (18) amplifies the displacement output of the piezo-electric exciter (16).

10. A computer program adapted to control a test apparatus for testing a parameter or parameters of a component subject to vibrations in use, the program providing a signal instruction to a piezo-electric exciter (16) to generate a displacement output, and connecting the displacement output to a vibratable body (2) supporting the component, receiving an output control signal from a controller (14) indicative of the displacement of the vibratable body (2) and to transmit the output control signal to the piezo-electric exciter (16) to adjust the displacement output of the exciter (16) and to maintain the displacement output at a desired value.
